# EUROPEAN PATENT SPECIFICATION

(11) **EP 2 761 695 B1**
(45) Date of publication and mention of the grant of the patent: **21.10.2020**
(21) Application number: 11873236.1
(22) Date of filing: 30.09.2011
(51) Int. Cl.: H01Q 3/26, H01Q 1/22, H01Q 3/36, G01S 5/02

(54) **METHOD AND APPARATUS FOR DIRECTIONAL PROXMITY DETECTION**
VERFAHREN UND VORRICHTUNG FÜR GERICHTETEN NÄHERUNGSNACHWEIS
PROCÉDÉ ET APPAREIL DE DÉTECTION DE PROXIMITÉ DIRECTIONNELLE

(43) Date of publication of application: 06.08.2014
(73) Proprietor: Intel Corporation, Santa Clara, CA 95054 (US)
(72) Inventor: XIA, Fan, Santa Clara CA 95054 (US); LIPMAN, Justin, Shanghai 201103 (CN)
(74) Representative: Goddar, Heinz J.
(86) International application number: PCT/US2011/054326
(87) International publication number: WO 2013/048454

(56) References cited:
- WO-A1-2004/088790
- WO-A1-2009/035723
- JP-A- 2004 080 247
- JP-A- 2006 333 068
- KR-A- 20040 089 267
- KR-A- 20050 041 243
- US-A- 6 094 164

## Description

### FIELD OF THE INVENTION

This invention relates to a wireless device, and more specifically but not exclusively, to a method and apparatus to facilitate directional proximity detection by the wireless device.

### BACKGROUND DESCRIPTION

In a wireless network, the mobile stations are able to communicate with each other using a wireless communication protocol. However, each mobile station does not have the capability to detect the location and proximity of another mobile station.

US 6,094,164 describes an integrated radio direction finding and GPS receiving system for locating an object, including a transmitter device attached to an object to be located and a tracking unit receiving the signal transmitted by the transmitter device.

WO 2009/035723 describes a radio frequency signal acquisition and source location system comprising an antenna, an RF transceiver coupled to the antenna, a processor provided with a data storage for storing a signal data record for each responsive signal received by the RF transceiver and a position logic operative upon the data record to derive a three dimensional signal origin location of each response signal.

### BRIEF DESCRIPTION OF THE DRAWINGS

The features and advantages of embodiments of the invention will become apparent from the following detailed description of the subject matter in which:
Figure 1 illustrates an elementary antenna array in accordance with one embodiment of the invention;
Figure 2 illustrates a linear phase antenna array in accordance with one embodiment of the invention;
Figure 3 illustrates the direction of the beam of the antenna array in accordance with one embodiment of the invention;
Figure 4 illustrates a usage scenario in accordance with one embodiment of the invention; and
Figure 5 illustrates a system to implement the methods disclosed herein in accordance with one embodiment of the invention.

### DETAILED DESCRIPTION

Embodiments of the invention described herein are illustrated by way of example and not by way of limitation in the accompanying figures. For simplicity and clarity of illustration, elements illustrated in the figures are not necessarily drawn to scale. For example, the dimensions of some elements may be exaggerated relative to other elements for clarity. Further, where considered appropriate, reference numerals have been repeated among the figures to indicate corresponding or analogous elements. Reference in the specification to "one embodiment" or "an embodiment" of the invention means that a particular feature, structure, or characteristic described in connection with the embodiment is included in at least one embodiment of the invention. Thus, the appearances of the phrase "in one embodiment" in various places throughout the specification are not necessarily all referring to the same embodiment.

The invention is defined by the appended claims. Any examples not falling within the scope of the claims are provided as background information.

Embodiments of the invention provide a method and apparatus to facilitate directional proximity detection by a wireless device. In one embodiment of the invention, the wireless device has a phased array antenna system that facilitates the directional detection of other wireless device(s). For example, in one embodiment of the invention, the phased array antenna system of the wireless device uses a radiation pattern beam that circumrotates the wireless device to detect the proximity and location of other wireless devices.

In another example, in one embodiment of the invention, the wireless device uses a search strategy to optimize the process to detect the proximity and location of other wireless devices. The search strategy may adjust the radiation pattern beam to any desired angle to detect the proximity and location of other wireless devices in one embodiment of the invention. For example, in one embodiment of the invention, the wireless device uses a search strategy that first performs a wide angle, i.e., 360 or 180 degrees, of broadcasting to determine the broad location of the other wireless device(s). Secondly, once the wireless device has determined the broad location of the wireless device(s), the search strategy performs a narrow angle, i.e., 45 degrees of smaller, to determine the narrow and more accurate location of the other wireless device(s). By doing so, the wireless device is able to detect the other wireless device(s) within a small angle of detection and reduce the noise effects in one embodiment of the invention.

In one embodiment of the invention, the wireless device is capable of heterogeneous wireless communication by accessing a plurality of wireless networks and/or wired networks. In one embodiment of the invention, the wireless device includes, but is not limited to, a wireless electronic device such as a desktop computer, a laptop computer, a handheld computer, a tablet computer, a cellular telephone, a pager, an audio and/or video player (e.g., an MP3 player or a DVD player), a gaming device, a video camera, a digital camera, a navigation device (e.g., a GPS device), a wireless peripheral (e.g., a printer, a scanner, a headset, a keyboard, a mouse, etc.), a medical device (e.g., a heart rate monitor, a blood pressure monitor, etc.), digital audio speakers for enhanced audio, gaming devices, and/or other suitable fixed, portable, or mobile electronic devices.

The wireless device uses a modulation technique, including but not limited to, spread spectrum modulation (e.g., direct sequence code division multiple access (DS-CDMA) and/or frequency hopping code division multiple access (FH-CDMA)), time-division multiplexing (TDM) modulation, frequency-division multiplexing (FDM) modulation, orthogonal frequency-division multiplexing (OFDM) modulation, orthogonal frequency-division multiple access (OFDMA), multi-carrier modulation (MDM), and/or other suitable modulation techniques to communicate via wireless communication links.

In one embodiment of the invention, the wireless device communicates at least in part in accordance with communication standards such as, but are not limited to, Institute of Electrical and Electronic Engineers (IEEE) 802.11 (a), 802.11(b), 802.11(g), 802.11(h), 802.11(j), 802.11(n), 802.16-2004, 802.16(e), 802.16(m) and their variations and evolutions thereof standards, and/or proposed specifications, Home Plug AV (HPAV), Ultra Wide Band (UWB), Bluetooth, or any form of wireless communication protocol, although the scope of the invention is not limited in this respect as they may also be suitable to transmit and/or receive communications in accordance with other techniques and standards.

For more information with respect to the IEEE 802.11 and IEEE 802.16 standards, please refer to "IEEE Standards for Information Technology -- Telecommunications and Information Exchange between Systems" - Local Area Networks - Specific Requirements - Part 11 "Wireless LAN Medium Access Control (MAC) and Physical Layer (PHY), ISO/IEC 8802-11: 1999", and Metropolitan Area Networks - Specific Requirements - Part 16: "Air Interface for Fixed Broadband Wireless Access Systems," May 2005 and related amendments/versions.

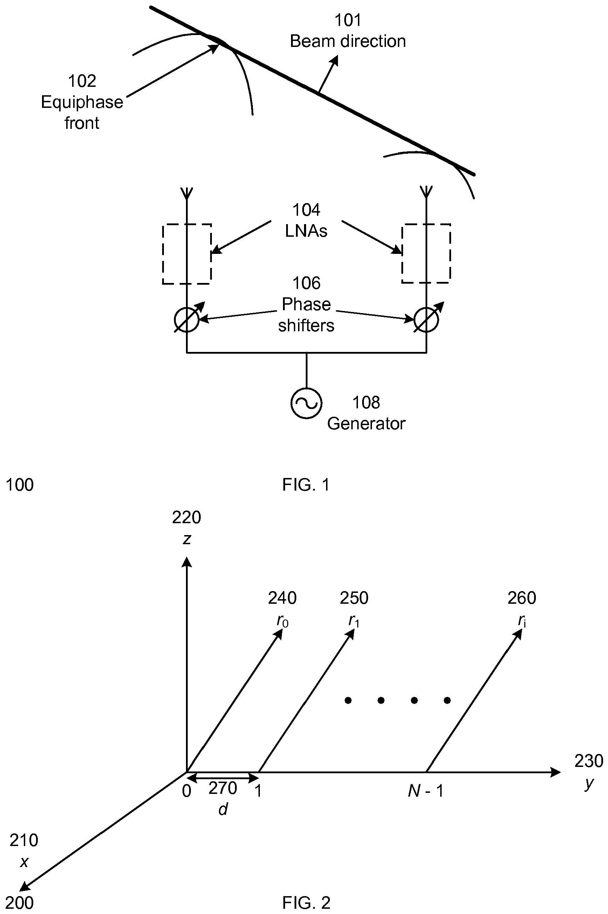

Figure 1 illustrates an elementary or phase antenna array in a wireless device in accordance with one embodiment of the invention. In one embodiment of the invention, the elementary antenna array has two radiators or antennas fed by a common signal source or generator **106.** The phase or delay shifters **106** provide the phase or delay control on each element of the elementary antenna array in one embodiment of the invention. The phase shifters **106** shift the feeding current phase into each antenna element to shift the transmitting signal's phase of the antenna elements in one embodiment of the invention. The phase shifters **106** can be developed using, but not limited to, Micro-Electro-Mechanical Systems (MEMS) switches and micro strip lines.

The elementary antenna array has a set of two or more antennas radiating or receiving electromagnetic energy with a known and controllable relationship between the time phases of the energy in each element in one embodiment of the invention. The radiation beams from the two radiators add vectorially in space as illustrated by the equiphase front **104** and the beam direction **102.** The direction of the maximum beam is controlled by the phase shifter **106** on each element in one embodiment of the invention.

In one embodiment of the invention, the shape of the beam of the antenna array is dependent on, but not limited to, the number and spacing of the elements of the antenna array, the relative amplitude of the feeding lines, and the phase of the feeding lines. The strength of the received signal can be increased by adding the low noise amplifiers (LNAs) **104** ahead of each antenna or radiator. The LNAs **104** amplifies the transmitted signals and is placed as close as possible to the radiating elements so that very little signal loss occurs before the first amplification on receiving the transmitted signals in one embodiment of the invention.

The wireless device has logic that controls the phased antenna array and it directs the phased antenna array to adjust the radiation pattern and search method so as to better facilitate the effective location of neighboring devices. The logic is part of the software that executes in the wireless device in one embodiment of the invention. In another embodiment of the invention, the logic is part of a firmware that executes in the wireless device. In yet another embodiment of the invention, the logic is part of an angle data signal processor that has software running as part of the proximity detection service which manages and controls the phase control signal, calculates the receiving Received Signal Strength Indication (RSSI) or Received Channel Power Indicator (RCPI) per beam and estimates the corresponding direction angle information.

In one embodiment of the invention, the wireless device receives the wireless signals transmitting from the neighboring wireless devices. The wireless device scans its surrounding region by circumrotating the direction of the beam or by using a search strategy in one embodiment of the invention. To change the direction of the beam, the elementary antenna array changes the time delay or phase of the signals on each element in one embodiment of the invention.

The wireless device receives the packets from the other wireless devices and measures or determines the RCPI / RSSI at each step or point of the scanning. For example, in one embodiment of the invention, the wireless device performs the scanning of its surrounding region by rotating the beam four times at 45 degrees. This allows a 360 degrees scanning by the wireless device. At each quadrant of the scanning, the wireless device measures the RSSI of the received packets in one embodiment of the invention. To determine the respective direction of a neighboring device, the wireless device determines the highest or best RSSI measurement among the RSSI measurements for each quadrant. The quadrant that gives the best or highest RSSI measurement indicates the direction of the neighboring wireless device in one embodiment of the invention.

The wireless device may also set a RSSI threshold that indicates the proximity of the neighboring devices from the wireless device. For example, in one embodiment of the invention, the wireless device wants to determine the neighboring wireless devices that are within a particular distance. In one embodiment of the invention, the wireless device configures the RSSI threshold that indicates a particular distance by performing an initial RSSI measurement of the received packets from another wireless device that is placed at the particular distance away from the wireless device.

For example, in one embodiment of the invention, the wireless device is required to detect the neighboring wireless devices that are within 1 meter of the wireless device. The wireless device performs a calibration step of measuring the RSSI of the received packets from another wireless device that is placed 1 meter away from the wireless device. In one embodiment of the invention, the wireless device uses the measured RSSI of the received packets from the other wireless device that is placed 1 meter away from the wireless device as the RSSI threshold. By doing so, the wireless device is able to detect the neighboring wireless devices that are within the desired distance and is able to detect the direction of the neighboring wireless devices with respect to the wireless device in one embodiment of the invention.

The above illustrations of determining the proximity and the direction of the neighboring wireless devices are not meant to be limiting. One of ordinary skill in the relevant art will readily appreciate that the angular width of the beam of the wireless device can be set to another angle and it shall not be described herein. One of ordinary skill in the relevant art will also readily appreciate that other criteria besides the RSSI of the received packets can be used without affecting the workings of the invention and the description of the other criteria shall not be described herein. For example, in one embodiment of the invention, the RCPI of the received packets is used as the criteria. The ability of a wireless device to detect the location and proximity of another wireless device enables collaboration between users in one embodiment of the invention.

Figure 2 illustrates a linear phase antenna array **200** in accordance with one embodiment of the invention. The linear phase antenna array **200** is a distribution of antenna elements that utilize the element spacing, or location, along with a variable phase control or phase shifter at each element which will allow the effective radiation pattern of the array to rotate to a desired direction in one embodiment of the invention.

The *x* axis **210,** *y* axis **230** and the *z* axis **220** illustrate the three axes and the linear phase antenna array **200** is illustrated as *N* number of elements that lie in the *y*-*z* plane. The linear phase antenna array **200** has the elements *r*₀ **240,** *r*₁ **250** and *r*ᵢ, **260.** The element *r*ᵢ **260** represents that the linear phase antenna array **200** can have any number of elements in one embodiment of the invention.

By allowing the receiving beams of the linear phase antenna array **200** to be rotated, it allows the wireless device to detect the direction of the other neighboring wireless devices in one embodiment of the invention. The beam width of the linear phase antenna array **200** determines the accuracy of the direction detection. By designing the antenna array in a corresponding manner and electronically controlling the phase shifter, the width of the beam can be designed to be 45 degrees or lower in one embodiment of the invention.

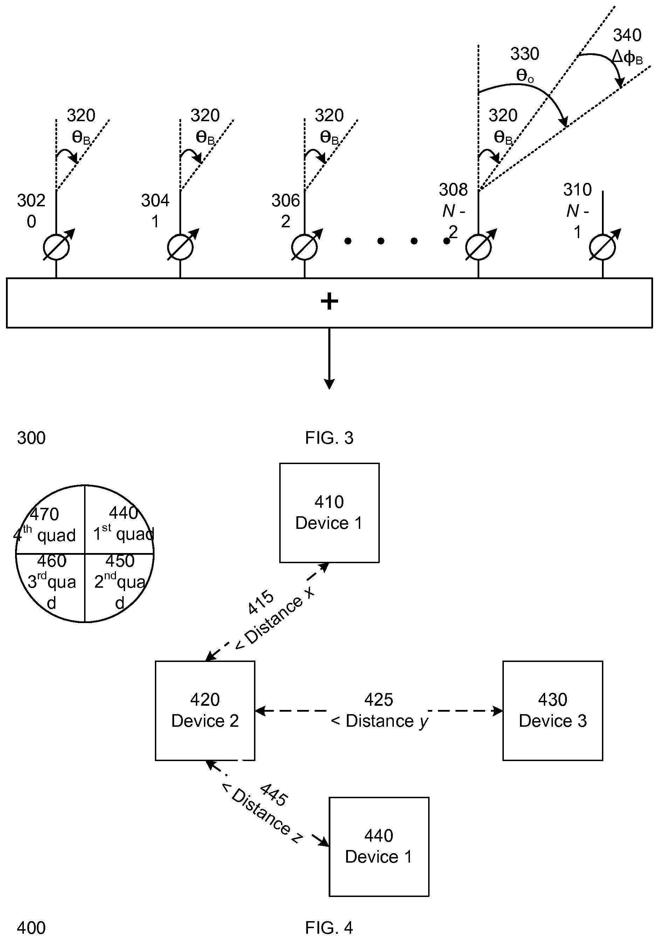

Figure 3 illustrates the direction of the beam of the linear phase antenna array **300** in accordance with one embodiment of the invention. For clarity of illustration, figure 3 is discussed with reference to figure 2. The linear phase antenna array **300** has *N* antenna elements that has a phase shifter 0 **302,** 1 **304,** 2 **306,** (N - 2) **308** and (*N* - 1) **310** in one embodiment of the invention. The number *N* represents that there can be any number of antenna elements and phase shifters.

Each of the *N* antenna elements in the linear phase antenna array **300** is illustrated to have a radiation beam at an angle B 320. The direction of the object, i.e., the other wireless device, is illustrated to have an angle ° **330.** The difference between the angle of the radiation beam and the angle of the object is illustrated as Δ_{B} 340. In one embodiment of the invention, when the design of each antenna element and their distance is fixed, the beam direction of the linear antenna array radiation pattern can be changed accordingly by tuning the feeding current phase.

For example, in one embodiment of the invention, the beam direction of the linear antenna array radiation pattern is changed to the direction of the object by feeding the current phase of Δ_{B} 340 to each of the phase shifter 0 **302,** 1 **304,** 2 **306,** (N - 2) **308** and (*N* - 1) **310.** The illustration in figure 3 shows a linear phase antenna array for clarity of illustration and it is not meant to be limiting. For other arrays that are placed in a non-linear way, the radiation pattern of the phase antenna array can be considered as a multiplication of the multiple linear arrays' radiation pattern. One of ordinary skill in the relevant art will readily appreciate how to configure the phase shifters for other non-linear antenna arrays and shall not be described herein.

Figure 4 illustrates a usage scenario in accordance with one embodiment of the invention. The wireless devices 1 **410,** 2 **420** 3 **430** and 4 **440** illustrates a usage scenario in one embodiment of the invention. The device 1 **410** is assumed to be located at distance *x* **415** away from the device 2 **420,** the device 3 **430** is assumed to be located at distance *y* **425** away from the device 2 **420,** and the device 4 **440** is assumed to be located at distance z **445** away from the device 2 **420.**

In one embodiment of the invention, each of the wireless devices 1 **410,** 2 **420** 3 **430** and 4 **440** has a hardware based phase control structure. The hardware based phase control structure changes its status based on a control signal. The control signal periodically changes as a function of time in one embodiment of the invention. When the hardware based phase control structure changes its status, the antenna array's receiving radiation pattern beam changes its direction.

When a beam's direction covers the direction where the other device is facing the detecting device, the receiving power achieves the maximum value in the particular detecting period. This allows any one of the wireless devices 1 **410,** 2 **420** 3 **430** and 4 **440** to determine from the beam's direction about the respective direction of the neighboring device.

For clarity of illustration, the 1^{st} quadrant **440,** 2^{nd} quadrant **450,** 3^{rd} quadrant **460** and 4th quadrant **470** illustrate the four possible regions of rotating the beam direction in one embodiment of the invention. For example, in one embodiment of the invention, the wireless device 2 **420** performs a directional proximity detection of its neighboring wireless devices 1 **410, 3 430** and 4 **440** by checking which one of the 1^{st} quadrant **440,** 2^{nd} quadrant **450,** 3^{rd} quadrant **460** and 4th quadrant **470** has the highest RSSI measurements for the received packets from the wireless devices 1 **410,** 3 **430** and 4 **440.**

Since the wireless device 1 **410** is illustrated to lie in the region of the 1^{st} quadrant **440** of the wireless device 2 **420** and assuming that the distance *x* **415** is within the proximity desired by the wireless device 2 **420,** the measurement of the RSSI of the received packets from the wireless 1 **410** is the highest when the beam of the wireless device 2 **420** is rotated to the 1^{st} quadrant **440.** This allows the wireless device 2 **420** to determine that the direction of the wireless device 2 **420** is in the 1^{st} quadrant.

Assuming the distance *y* **425** is beyond the proximity desired by the wireless device 2 **420,** the wireless device 2 **420** does not detect the direction of the wireless device 3 **430.** Since the wireless device 4 **440** is illustrated to lie in the region of the 2^{nd} quadrant **450** of the wireless device 2 **420** and assuming that the distance *z* **445** is within the proximity desired by the wireless device 2 **420,** the measurement of the RSSI of the received packets from the wireless 4 **440** is the highest when the beam of the wireless device 2 **420** is rotated to the 2^{nd} quadrant **450.** This allows the wireless device 2 **420** to determine that the direction of the wireless device 4 **440** is in the 2^{nd} quadrant.

In one embodiment of the invention, the setting of the RSSI threshold for the desired proximity is set during a calibration procedure where the RSSI measurement of the received packets from a wireless device is measured when the wireless device is set to a known device or desired distance. The phase control of the phase shifters is controlled electronically in one embodiment of the invention. This allows a faster response time in changing the position of the antenna beam.

The usage scenario illustrated in figure 4 is not meant to be limiting. For clarity of illustration, the wireless devices 1 **410,** 2 **420** 3 **430** and 4 **440** are assumed to be lying in substantially the same plane of each other. In other usage scenarios where wireless devices 1 **410, 2 420 3 430** and 4 **440** are not lying in substantially the same plane of each other, the addition of a gyroscope aids in assisting the user to position the wireless devices in the appropriate plane for the directional proximity detection.

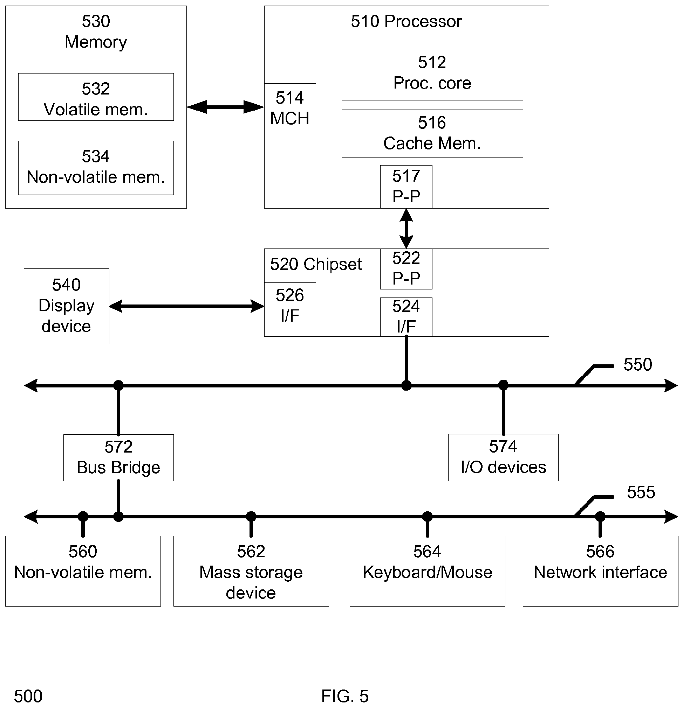

Figure 5 illustrates a system **500** to implement the methods disclosed herein in accordance with one embodiment of the invention. The system **500** illustrates a wireless device in one embodiment of the invention. The system **500** includes, but is not limited to, a desktop computer, a laptop computer, a net book, a notebook computer, a personal digital assistant (PDA), a server, a workstation, a cellular telephone, a mobile computing device, an Internet appliance or any other type of computing device. In another embodiment, the system **500** used to implement the methods disclosed herein may be a system on a chip (SOC) system.

The processor **510** has a processing core **512** to execute instructions of the system **500.** The processing core **512** includes, but is not limited to, pre-fetch logic to fetch instructions, decode logic to decode the instructions, execution logic to execute instructions and the like. The processor **510** has a cache memory **516** to cache instructions and/or data of the system **500.** In another embodiment of the invention, the cache memory **516** includes, but is not limited to, level one, level two and level three, cache memory or any other configuration of the cache memory within the processor **510.**

The memory control hub (MCH) **514** performs functions that enable the processor **510** to access and communicate with a memory **530** that includes a volatile memory **532** and/or a non-volatile memory **534.** The volatile memory **532** includes, but is not limited to, Synchronous Dynamic Random Access Memory (SDRAM), Dynamic Random Access Memory (DRAM), RAMBUS Dynamic Random Access Memory (RDRAM), and/or any other type of random access memory device. The non-volatile memory **534** includes, but is not limited to, NAND flash memory, phase change memory (PCM), read only memory (ROM), electrically erasable programmable read only memory (EEPROM), or any other type of non-volatile memory device.

The memory **530** stores information and instructions to be executed by the processor **510.** The memory **530** may also stores temporary variables or other intermediate information while the processor **510** is executing instructions. The chipset **520** connects with the processor **510** via Point-to-Point (PtP) interfaces **517** and **522.** The chipset **520** enables the processor **510** to connect to other modules in the system **500.** In one embodiment of the invention, the interfaces **517** and **522** operate in accordance with a PtP communication protocol such as the Intel® QuickPath Interconnect (QPI) or the like. The chipset **520** connects to a display device **540** that includes, but is not limited to, liquid crystal display (LCD), cathode ray tube (CRT) display, or any other form of visual display device.

In addition, the chipset **520** connects to one or more buses **550** and **555** that interconnect the various modules **574, 560, 562, 564,** and **566.** Buses **550** and **555** may be interconnected together via a bus bridge **572** if there is a mismatch in bus speed or communication protocol. The chipset **520** couples with, but is not limited to, a non-volatile memory **560,** a mass storage device(s) **562,** a keyboard/mouse **564** and a network interface **566.** The mass storage device **562** includes, but is not limited to, a solid state drive, a hard disk drive, an universal serial bus flash memory drive, or any other form of computer data storage medium. The network interface **566** is implemented using any type of well known network interface standard including, but not limited to, an Ethernet interface, a universal serial bus (USB) interface, a Peripheral Component Interconnect (PCI) Express interface, a wireless interface and/or any other suitable type of interface. The wireless interface operates in accordance with, but is not limited to, the IEEE 802.11 standard and its related family, Home Plug AV (HPAV), Ultra Wide Band (UWB), Bluetooth, WiMax, or any form of wireless communication protocol.

While the modules shown in figure 5 are depicted as separate blocks within the system **500,** the functions performed by some of these blocks may be integrated within a single semiconductor circuit or may be implemented using two or more separate integrated circuits. For example, although the cache memory **516** is depicted as a separate block within the processor **510,** the cache memory **516** can be incorporated into the processor core **512** respectively. The system **500** may include more than one processor / processing core in another embodiment of the invention.

The methods disclosed herein can be implemented in hardware, software, firmware, or any other combination thereof. Although examples of the embodiments of the disclosed subject matter are described, one of ordinary skill in the relevant art will readily appreciate that many other methods of implementing the disclosed subject matter may alternatively be used. In the preceding description, various aspects of the disclosed subject matter have been described. For purposes of explanation, specific numbers, systems and configurations were set forth in order to provide a thorough understanding of the subject matter. However, it is apparent to one skilled in the relevant art having the benefit of this disclosure that the subject matter may be practiced without the specific details. In other instances, well-known features, components, or modules were omitted, simplified, combined, or split in order not to obscure the disclosed subject matter.

The term "is operable" used herein means that the device, system, protocol etc, is able to operate or is adapted to operate for its desired functionality when the device or system is in off-powered state. Various embodiments of the disclosed subject matter may be implemented in hardware, firmware, software, or combination thereof, and may be described by reference to or in conjunction with program code, such as instructions, functions, procedures, data structures, logic, application programs, design representations or formats for simulation, emulation, and fabrication of a design, which when accessed by a machine results in the machine performing tasks, defining abstract data types or low-level hardware contexts, or producing a result.

The techniques shown in the figures can be implemented using code and data stored and executed on one or more computing devices such as general purpose computers or computing devices. Such computing devices store and communicate (internally and with other computing devices over a network) code and data using machine-readable media, such as machine readable storage media (e.g., magnetic disks; optical disks; random access memory; read only memory; flash memory devices; phase-change memory) and machine readable communication media (e.g., electrical, optical, acoustical or other form of propagated signals - such as carrier waves, infrared signals, digital signals, etc.).

While the disclosed subject matter has been described with reference to illustrative embodiments, this description is not intended to be construed in a limiting sense. Various modifications of the illustrative embodiments, as well as other embodiments of the subject matter, which are apparent to persons skilled in the art to which the disclosed subject matter pertains are deemed to lie within the scope of the disclosed subject matter, as defined by the appended claims.

## Claims

1. A system comprising:
an antenna array having a plurality of antenna elements;
a plurality of phase shifters, wherein each phase shifter is coupled with a respective one of the plurality of antenna elements; and
logic configured to vary an effective radiation pattern of the antenna array to determine a spatial location of a wireless device communicatively coupled with the system;
wherein the logic configured to vary the effective radiation pattern of the antenna array is configured to first perform a 180 degrees search for a broad location of the wireless device communicatively coupled with the system and to then perform a 45 degrees search to determine an accurate location of the wireless device communicatively coupled with the system.

2. The system of claim 1, wherein the logic to vary the effective radiation pattern of the antenna array to determine the spatial location of the wireless device communicatively coupled with the system is to:
rotate a respective receiving beam of each antenna element around the wireless device;
determine a Received Signal Strength Indication, RSSI, of received packets from the wireless device for the respective receiving beam of each antenna element; and
estimate the spatial location of the wireless device based on the determined RSSI of the received packets from the wireless device for the respective receiving beam of each antenna element.

3. The system of claim 1, wherein the logic to vary the effective radiation pattern of the antenna array to determine the spatial location of the wireless device communicatively coupled with the system is to:
rotate a respective receiving beam of each antenna element around the wireless device;
determine a Received Channel Power Indicator, RCPI, of received packets from the wireless device for the respective receiving beam of each antenna element; and
estimate the spatial location of the wireless device based on the determined RCPI of the received packets from the wireless device for the respective receiving beam of each antenna element.

4. The system of claim 1, wherein the logic to rotate the respective receiving beam of each antenna element around the wireless device is to shift a respective feeding current phase by a respective phase shifter into each antenna element,
the system further comprising:
a plurality of Low Noise Amplifiers, LNAs, wherein each LNA is coupled with a respective one of the plurality of antenna elements, and
a gyroscope, and
wherein the logic to vary the effective radiation pattern of the antenna array to determine the spatial location of the wireless device communicatively coupled with the system is to vary the effective radiation pattern of the antenna array to determine the spatial location of the wireless device communicatively coupled with the system based at least in part on the gyroscope.

5. A method comprising:
determining a directional proximity of a second wireless device from a first wireless device by varying an effective radiation pattern of an antenna array of the first wireless device by performing, by the first wireless device, a 180 degrees search for a broad location of the second wireless device and by then performing a 45 degrees search to determine an accurate location of the second wireless device.

6. The method of claim 5, wherein varying the effective radiation pattern of the antenna array of the first wireless device comprises:
shifting, by the first wireless device, a respective feeding current phase by a respective phase shifter into each antenna element of the antenna array,
and wherein determining the directional proximity of the second wireless device from the first wireless device by varying the effective radiation pattern of the antenna array of the first wireless device comprises:
determining, by the first wireless device, a Received Signal Strength Indication, RSSI, of received packets from the second wireless device for the beam of the antenna array in the first wireless device; and
determining the directional proximity of the second wireless device from the first wireless device based on the determined RSSI of the received packets from the second wireless device.

7. The method of claim 5, wherein varying the effective radiation pattern of the antenna array of the first wireless device comprises:
determining, by the first wireless device, a Received Channel Power Indicator, RCPI, of received packets from the second wireless device for the beam of the antenna array in the first wireless device; and
determining the directional proximity of the second wireless device from the first wireless device based on the determined RCPI of the received packets from the second wireless device.

8. The method of claim 6, further comprising:
determining the directional proximity of the second wireless device from the first wireless device based on the determined RSSI of the received packets from the second wireless device and a determined orientation of the first wireless device.

9. The method of claim 5, wherein the first and the second wireless devices are operable at least in part with one of Institute of Electrical and Electronics Engineers, IEEE, 802.11 standard, a IEEE 802.16m standard, a 3^{rd} Generation Partnership Project, 3GPP, Long Term Evolution standard, a Bluetooth standard, a ultra wideband standard.

## Patentansprüche

1. System, umfassend:
eine Antennenanordnung, die eine Vielzahl von Antennenelementen aufweist;
eine Vielzahl von Phasenschiebern, wobei jeder Phasenschieber mit jeweils einem der Vielzahl von Antennenelementen gekoppelt ist; und
Logik, die dazu ausgelegt ist, ein effektives Strahlungsdiagramm der Antennenanordnung zu verändern, um einen räumlichen Standort einer Drahtlosvorrichtung zu bestimmen, die kommunikationstechnisch mit dem System gekoppelt ist;
wobei die Logik, die zum Verändern des effektiven Strahlungsdiagramms der Antennenanordnung ausgelegt ist, dazu ausgelegt ist, zunächst eine 180-Grad-Suche nach einem groben Standort der kommunikationstechnisch mit dem System gekoppelten Drahtlosvorrichtung durchzuführen und anschließend eine 45-Grad-Suche durchzuführen, um einen genauen Standort der kommunikationstechnisch mit dem System gekoppelten Drahtlosvorrichtung zu bestimmen.

2. System gemäß Anspruch 1, wobei die Logik zum Verändern des effektiven Strahlungsdiagramms der Antennenanordnung, um den räumlichen Standort der kommunikationstechnisch mit dem System gekoppelten Drahtlosvorrichtung zu bestimmen, dazu dient:
einen jeweiligen Empfangsstrahl jedes Antennenelements um die Drahtlosvorrichtung zu drehen;
einen Indikator für die empfangene Signalstärke, RSSI, von aus der Drahtlosvorrichtung empfangenen Paketen für den jeweiligen Empfangsstrahl jedes Antennenelements zu bestimmen; und
den räumlichen Standort der Drahtlosvorrichtung basierend auf dem bestimmten RSSI der aus der Drahtlosvorrichtung empfangenen Pakete für den jeweiligen Empfangsstrahl jedes Antennenelements zu bestimmen.

3. System gemäß Anspruch 1, wobei die Logik zum Verändern des effektiven Strahlungsdiagramms der Antennenanordnung, um den räumlichen Standort der kommunikationstechnisch mit dem System gekoppelten Drahtlosvorrichtung zu bestimmen, dazu dient:
einen jeweiligen Empfangsstrahl jedes Antennenelements um die Drahtlosvorrichtung zu drehen;
einen Indikator für die empfangene Kanalleistung, RCPI, von aus der Drahtlosvorrichtung empfangenen Pakete für den jeweiligen Empfangsstrahl jedes Antennenelements zu bestimmen; und
den räumlichen Standort der Drahtlosvorrichtung basierend auf dem bestimmten RCPI der aus der Drahtlosvorrichtung empfangenen Pakete für den jeweiligen Empfangsstrahl jedes Antennenelements zu bestimmen.

4. System gemäß Anspruch 1, wobei die Logik zum Drehen des jeweiligen Empfangsstrahls jedes Antennenelements um die Drahtlosvorrichtung darin besteht, eine jeweilige Speisestromphase durch einen jeweiligen Phasenschieber in jedes Antennenelement zu verschieben,
wobei das System ferner umfasst:
eine Vielzahl von rauscharmen Verstärkern, LNAs, wobei jeder LNA mit jeweils einem der Vielzahl von Antennenelementen gekoppelt ist, und
ein Gyroskop, und
wobei die Logik zum Verändern des effektiven Strahlungsdiagramms der Antennenanordnung, um den räumlichen Standort der kommunikationstechnisch mit dem System gekoppelten Drahtlosvorrichtung zu bestimmen, darin besteht, das effektive Strahlungsdiagramm der Antennenanordnung zu verändern, um den räumlichen Standort der kommunikationstechnisch mit dem System gekoppelten Drahtlosvorrichtung mindestens teilweise basierend auf dem Gyroskop zu bestimmen.

5. Verfahren, umfassend:
Bestimmen einer gerichteten Nähe einer zweiten Drahtlosvorrichtung von einer ersten Drahtlosvorrichtung durch Verändern eines effektiven Strahlungsdiagramms einer Antennenanordnung der ersten Drahtlosvorrichtung durch Durchführen einer 180-Grad-Suche durch die erste Drahtlosvorrichtung nach einem groben Standort der zweiten Drahtlosvorrichtung und durch anschließendes Durchführen einer 45-Grad-Suche, um einen genauen Standort der zweiten Drahtlosvorrichtung zu bestimmen.

6. Verfahren gemäß Anspruch 5, wobei das Verändern des effektiven Strahlungsdiagramms der Antennenanordnung der ersten Drahtlosvorrichtung umfasst:
Verschieben einer jeweiligen Speisestromphase durch die erste Drahtlosvorrichtung durch einen jeweiligen Phasenschieber in jedes Antennenelement der Antennenanordnung,
und wobei das Bestimmen der gerichteten Nähe der zweiten Drahtlosvorrichtung von der ersten Drahtlosvorrichtung durch Verändern des effektiven Strahlungsdiagramms der Antennenanordnung der ersten Drahtlosvorrichtung umfasst:
Bestimmen, durch die erste Drahtlosvorrichtung, eines Indikators für die empfangene Signalstärke, RSSI, von empfangenen Paketen aus der zweiten Drahtlosvorrichtung für den Strahl der Antennenanordnung in der ersten Drahtlosvorrichtung; und
Bestimmen der gerichteten Nähe der zweiten Drahtlosvorrichtung von der ersten Drahtlosvorrichtung basierend auf dem bestimmten RSSI der aus der zweiten Drahtlosvorrichtung empfangenen Pakete.

7. Verfahren gemäß Anspruch 5, wobei das Verändern des effektiven Strahlungsdiagramms der Antennenanordnung der ersten Drahtlosvorrichtung umfasst:
Bestimmen, durch die erste Drahtlosvorrichtung, eines Indikators für die empfangene Kanalleistung, RCPI, von empfangenen Paketen aus der zweiten Drahtlosvorrichtung für den Strahl der Antennenanordnung in der ersten Drahtlosvorrichtung; und
Bestimmen der gerichteten Nähe der zweiten Drahtlosvorrichtung von der ersten Drahtlosvorrichtung basierend auf dem bestimmten RCPI der aus der zweiten Drahtlosvorrichtung empfangenen Pakete.

8. Verfahren gemäß Anspruch 6, ferner umfassend:
Bestimmen der gerichteten Nähe der zweiten Drahtlosvorrichtung von der ersten Drahtlosvorrichtung basierend auf dem bestimmten RSSI der empfangenen Pakete aus der zweiten Drahtlosvorrichtung und einer bestimmten Ausrichtung der ersten Drahtlosvorrichtung.

9. Verfahren gemäß Anspruch 5, wobei die erste und die zweite Drahtlosvorrichtung mindestens teilweise mit einer von der Institute of Electrical and Electronics Engineers-, IEEE-, Norm 802.11, einer IEEE-Norm 802.16m, einer 3rd Generation Partnership Project, 3GPP, Long Term Evolution-Norm, einer Bluetooth-Norm, einer Ultrabreitband-Norm betriebsfähig sind.

## Revendications

1. Système comportant :
un réseau d'antennes doté d'une pluralité d'éléments d'antenne ;
une pluralité de déphaseurs, chaque déphaseur étant couplé avec un élément respectif de la pluralité d'éléments d'antenne ; et
une logique configurée pour faire varier un diagramme de rayonnement effectif du réseau d'antennes pour déterminer un emplacement spatial d'un dispositif sans fil couplé de façon communicative avec le système ;
la logique configurée pour faire varier le diagramme de rayonnement effectif du réseau d'antennes étant configurée pour effectuer d'abord une recherche sur 180 degrés d'un emplacement général du dispositif sans fil couplé de façon communicative avec le système et pour effectuer ensuite une recherche sur 45 degrés pour déterminer un emplacement précis du dispositif sans fil couplé de façon communicative avec le système.

2. Système selon la revendication 1, la logique qui sert à faire varier le diagramme de rayonnement effectif du réseau d'antennes pour déterminer l'emplacement spatial du dispositif sans fil couplé de façon communicative avec le système servant à :
faire tourner un faisceau de réception respectif de chaque élément d'antenne autour du dispositif sans fil ;
déterminer une indication d'intensité de signal reçu, RSSI, de paquets reçus en provenance du dispositif sans fil pour le faisceau de réception respectif de chaque élément d'antenne ; et
estimer l'emplacement spatial du dispositif sans fil d'après la RSSI déterminée des paquets reçus en provenance du dispositif sans fil pour le faisceau de réception respectif de chaque élément d'antenne.

3. Système selon la revendication 1, la logique qui sert à faire varier le diagramme de rayonnement effectif du réseau d'antennes pour déterminer l'emplacement spatial du dispositif sans fil couplé de façon communicative avec le système servant à :
faire tourner un faisceau de réception respectif de chaque élément d'antenne autour du dispositif sans fil ;
déterminer un indicateur de puissance de canal reçu, RCPI, de paquets reçus en provenance du dispositif sans fil pour le faisceau de réception respectif de chaque élément d'antenne ; et
estimer l'emplacement spatial du dispositif sans fil d'après le RCPI déterminé des paquets reçus en provenance du dispositif sans fil pour le faisceau de réception respectif de chaque élément d'antenne.

4. Système selon la revendication 1, la logique qui sert à faire tourner le faisceau de réception respectif de chaque élément d'antenne autour du dispositif sans fil servant à faire décaler une phase respective de courant d'alimentation par un déphaseur respectif entrant dans chaque élément d'antenne,
le système comportant en outre :
une pluralité d'amplificateurs à faible bruit, LNA, chaque LNA étant couplé avec un élément respectif de la pluralité d'éléments d'antenne, et
un gyroscope, et
la logique qui sert à faire varier le diagramme de rayonnement effectif du réseau d'antennes pour déterminer l'emplacement spatial du dispositif sans fil couplé de façon communicative avec le système servant à faire varier le diagramme de rayonnement effectif du réseau d'antennes pour déterminer l'emplacement spatial du dispositif sans fil couplé de façon communicative avec le système en se basant au moins en partie sur le gyroscope.

5. Procédé comportant :
la détermination d'une proximité directionnelle d'un second dispositif sans fil par rapport à un premier dispositif sans fil en faisant varier un diagramme de rayonnement effectif d'un réseau d'antennes du premier dispositif sans fil en faisant effectuer, par le premier dispositif sans fil, une recherche sur 180 degrés d'un emplacement général du second dispositif sans fil et en effectuant ensuite une recherche sur 45 degrés pour déterminer un emplacement précis du second dispositif sans fil.

6. Procédé selon la revendication 5, le fait de faire varier le diagramme de rayonnement effectif du réseau d'antennes du premier dispositif sans fil comportant :
le décalage, par le premier dispositif sans fil, d'une phase respective de courant d'alimentation par un déphaseur respectif entrant dans chaque élément d'antenne du réseau d'antennes,
et la détermination de la proximité directionnelle du second dispositif sans fil par rapport au premier dispositif sans fil en faisant varier le diagramme de rayonnement effectif du réseau d'antennes du premier dispositif sans fil comportant :
la détermination, par le premier dispositif sans fil, d'une Indication d'intensité de signal reçu, RSSI, de paquets reçus en provenance du second dispositif sans fil pour le faisceau du réseau d'antennes dans le premier dispositif sans fil ; et
la détermination de la proximité directionnelle du second dispositif sans fil par rapport au premier dispositif sans fil d'après la RSSI déterminée des paquets reçus en provenance du second dispositif sans fil.

7. Procédé selon la revendication 5, le fait de faire varier le diagramme de rayonnement effectif du réseau d'antennes du premier dispositif sans fil comportant :
la détermination, par le premier dispositif sans fil, d'un Indicateur de puissance de canal reçu, RCPI, de paquets reçus en provenance du second dispositif sans fil pour le faisceau du réseau d'antennes dans le premier dispositif sans fil ; et
la détermination de la proximité directionnelle du second dispositif sans fil par rapport au premier dispositif sans fil d'après le RCPI déterminé des paquets reçus en provenance du second dispositif sans fil.

8. Procédé selon la revendication 6, comportant en outre :
la détermination de la proximité directionnelle du second dispositif sans fil par rapport au premier dispositif sans fil d'après la RSSI déterminée des paquets reçus en provenance du second dispositif sans fil et une orientation déterminée du premier dispositif sans fil.

9. Procédé selon la revendication 5, le premier et le second dispositif sans fil étant exploitables au moins en partie avec une norme parmi une norme Institute of Electrical and Electronics Engineers, IEEE, 802.11, une norme IEEE 802.16m, une norme d'évolution à long terme du projet de partenariat pour la 3ème génération, 3GPP, une norme Bluetooth et une norme de bande ultra large.
